# EUROPEAN PATENT SPECIFICATION

(11) **EP 2 817 461 B1**
(45) Date of publication and mention of the grant of the patent: **09.10.2019**
(21) Application number: 12824763.2
(22) Date of filing: 21.12.2012
(51) Int. Cl.: E03C 1/04, F16K 31/60

(54) **IMPROVEMENTS IN OR RELATING TO ABLUTIONARY FITTINGS**
VERBESSERUNGEN AN ODER IN ZUSAMMENHANG MIT WASCHARMATUREN
AMÉLIORATIONS DE, OU CONCERNANT DES, ACCESSOIRES POUR LES ABLUTIONS

(30) Priority: 23.12.2011 GB 201122222
(43) Date of publication of application: 31.12.2014
(73) Proprietor: Kohler Mira Ltd, Cheltenham Gloucestershire GL52 5EP (GB)
(72) Inventor: FEARNLEY, Karl Antony, Portishead, Somerset BS20 7FL (GB); RISBEY, Toby James, Quedgeley, Gloucestershire GL2 2BX (GB); CONNOLLY, James Ian, Cheltenham , Gloucestershire GL52 9RJ (GB); KINGTON, Gary, Bristol, Somerset BS14 0AJ (GB)
(74) Representative: Barker Brettell LLP
(86) International application number: PCT/GB2012/053264
(87) International publication number: WO 2013/093523

(56) References cited:
- EP-A1- 0 733 839
- EP-A1- 1 757 740
- DE-A1- 2 110 559
- DE-A1- 2 856 300
- DE-A1- 2 856 300
- US-A- 1 718 730

## Description

This invention relates to an ablutionary fitting. In particular, it relates to an ablutionary fitting comprising a tap and more particularly to a mixer tap. It also relates to a method of installing an ablutionary fitting.

The term "tap" will be used herein and it will be appreciated that it is equivalent to the term "faucet" in American English. A mixer tap includes controls to adjust water flow and the proportion of hot and cold water that is allowed to flow to the water outlet. A mixer tap may have two separate controls; one for controlling the flow of hot water and one for controlling the flow of cold water. Alternatively, a "monobloc" mixer tap typically includes a valve cartridge that controls the flow from both the hot and cold water supplies and is commonly controlled by a single control lever. The control lever is commonly able to control water flow rate when moved in one direction of motion and water temperature (i.e. the mix of hot and cold supplies) when moved in a second, different, direction of motion. This invention relates in particular, but not exclusively, to "monobloc" taps.

Examples of ablutionary fittings in which a control lever is connected to a valve mechanism received within a body of the fitting are disclosed in DE-A-2110559; DE-A-2856300; US-A-1718730; and EP-A-1757740.

DE2856300 discloses a valve in which an operating handle is pivoted to the side of a circular rotatable cap fitted to the valve housing. It has a hole at this end so that it can fit over the cap with the handle part bent outwards on the opposite side of the cap to the pivot mounting. The handle part may also have a hole adjacent its free end. A radial finger projects inwards from the opposite side of the initial hole to that from which the handle part extends to form the pivot mounting and an extension of this radial finger acts as an internal lever arm. This cooperates with a valve control element, so that the valve is operated by pivoting the operating handle. On the protruding side the cap may be slim-spherical and the operating handle, horizontally brought out from the cap, may be bent through approx. 45 deg. relative the cap middle axis, within the first half of the eyelet hole.

According to the invention we provide an ablutionary fitting as defined in claim 1 of the appended claims.

Optional features are the subject of claims 2 to 10.

An embodiment comprises a body and a control lever, the body having an outlet and a supply inlet, the body adapted to receive a control valve cartridge therein for controlling the flow of fluid from the supply inlet to the outlet, wherein the body comprises a single-piece and further includes a body aperture to provide access through the body for the connection of the control lever to the control valve cartridge.

This is advantageous because the body is not required to have a split through the body to receive the control lever or control valve cartridge. Instead, the body aperture is provided to allow access to the control valve cartridge. The fitting is thus easier to clean and has a sleek appearance. The fitting is also easy to install because the body comprises a single piece without break lines through it and thus does not require assembly.

The body aperture may face substantially rearwardly with respect to the orientation of the fitting when installed. This is advantageous as the aperture will be mostly hidden from view.

The body may include a base, the base having a base aperture, which forms the supply inlet. The base may be adapted to receive the control valve cartridge therethrough. This is advantageous because the body is not required to have a split through it to allow the installation of the cartridge from the top of the body as in the prior art. Instead, the cartridge is received through the base of the fitting.

The control lever may include a lever finger. The body aperture may be arranged to receive the lever finger therethrough. The lever finger may be adapted to connect to the control valve cartridge. This is advantageous as the lever finger comprises a narrow rod which thus allows the body aperture to be small.

The control lever and lever finger may be substantially U-shaped in cross-section. This is advantageous as the control lever can be arranged to "float" above or on top of the fitting, supported by the lever finger, which is received in the small body aperture at the rear of the fitting.

The body may have at least two internal sections; a control valve section and a spout section. The control valve section may be adapted to receive the control valve cartridge and the spout section including the outlet. This is advantageous as dividing the internal hollow volume of the body into sections allows the flow of water to be controlled more easily.

The control valve section and spout section may be separated, for example, by an internal wall. The wall may include a bore therethrough. The bore may be arranged such that the control valve cartridge, when installed in the control valve section, controls the flow of fluid through the bore to the spout section. The base may provide access to the control valve section. Thus, water can flow into the control valve section (and through the control valve cartridge when installed) and then into the spout section through the bore before leaving by the outlet.

The control valve section may be divided into two sections; a valve section and a control section. The valve section may be arranged to receive part of the control valve cartridge. A control member of the control valve cartridge may be arranged to extend into the control section. The body aperture may extend through the body into the control section. Thus, the control lever can be arranged to extend into the control section and connect to the control member.

The valve section and control section may be separated, for example, by an annular flange. This is advantageous because the flange can be used to locate the cartridge and also allows a control member of the cartridge to extend into the control section, separated from the valve section, for connection to the control lever.

The ablutionary fitting may comprise a tap. The tap may be a mixer tap.

Another embodiment provides an ablutionary fitting comprising a body and a control lever, the body having an outlet and a supply inlet, the body adapted to receive a control valve cartridge therein for controlling the flow of fluid from the supply inlet to the outlet, the body including a base, the base having a base aperture, which forms the supply inlet, wherein the base aperture is adapted to receive the control valve cartridge therethrough.

This is advantageous as the body is adapted to receive the control valve cartridge through its base and therefore the remainder of the body is not required to come apart to allow access to the body to install the control valve cartridge. Thus, the body can be formed of a single unbroken piece as the base provides access to the inside of the body and the control lever attaches to the cartridge through a small control body aperture.

The body may further include a body aperture to provide access through the body for the connection of the control lever to the control valve cartridge. The body aperture may face substantially rearwardly with respect to the orientation of the fitting when installed.

The control lever may include a lever finger. The body aperture may be arranged to receive the lever finger therethrough. The lever finger may be adapted to connect to the control valve cartridge. The control lever and lever finger may be substantially U-shaped in cross-section.

The body may have at least two internal sections; a control valve section and a spout section. The control valve section may be adapted to receive the control valve cartridge and the spout section including the outlet. The control valve section and spout section may be separated, for example, by an internal wall. The wall may include a bore therethrough. The bore may be arranged such that the control valve cartridge, when installed in the control valve section, controls the flow of fluid through the bore to the spout section. The base may provide access to the control valve section. Thus, water can flow into the control valve section (and through the control valve cartridge when installed) and then into the spout section through the bore before leaving by the outlet.

The control valve section may be divided into two sections; a valve section and a control section. The valve section may be arranged to receive part of the control valve cartridge. A control member of the control valve cartridge may be arranged to extend into the control section. The body aperture may extend through the body into the control section. Thus, the control lever may be arranged to extend into the control section and connect to the control member.

The valve section and control section may be separated, for example, by an annular flange. This is advantageous because the flange can be used to locate the cartridge and also allows a control member of the cartridge to extend into the control section, separated from the valve section, for connection to the control lever.

The ablutionary fitting may comprise a tap. The tap may be a mixer tap. The tap body may be a single piece.

Another embodiment provides an ablutionary fitting comprising a body and a control lever, the body having an outlet and a supply inlet and the control lever for controlling the flow of fluid from the supply inlet to the outlet, wherein the body has an unbroken top surface and the control lever is attached to the ablutionary fitting such that it is aligned with the top surface but spaced therefrom.

This is advantageous as the control lever "floats" above the top surface of the ablutionary fitting because the control lever is not secured to the ablutionary fitting through the top surface, which can therefore be unbroken. The top surface, being located opposite the base of the fitting where it attaches to a support surface, is very visible in use and therefore having an unbroken surface is aesthetically pleasing and also easy to keep clean.

The control lever may be substantially in the form of a loop. The loop may be arranged to substantially follow the shape of a perimeter of the top surface of the ablutionary fitting. This is advantageous as the control lever will appear to float over the perimeter of the top surface and be easy to control.

The ablutionary fitting may be adapted and arranged such that the control lever is aligned with and is spaced above the top surface when the control lever is in an off position, whereby water flow through the fitting is prevented. It will be appreciated that if the control lever also controls water temperature by moving in a different direction to the control of water flow, the control lever may need to be positioned along that range of motion.

The ablutionary fitting may comprise a tap. The tap may be a mixer tap. The tap body may be a single piece.

Another embodiment provides an ablutionary fitting comprising a body and a control lever, the body having an outlet and a supply inlet, the body adapted to receive a control valve therein for controlling the flow of fluid from the supply inlet to the outlet, wherein the body comprises a single-piece and further includes a body aperture to provide access through the body for the connection of the control lever to the control valve.

The control valve may be in the form of a cartridge.

There now follows by way of example only a detailed description of the present invention with reference to the accompanying drawings, in which;
**Figure 1** shows a sectional, exploded view of an embodiment of the ablutionary fitting;
**Figure 2** shows a sectional view of the embodiment of Figure 1 with the control valve lever in an "off' position;
**Figure 3** shows a sectional view of the embodiment of Figure 1 with the control valve lever in an "on" position;
**Figure 4** shows an isometric view of the embodiment; and
**Figure 5** shows an isometric view of the rearwardly facing side of the embodiment.

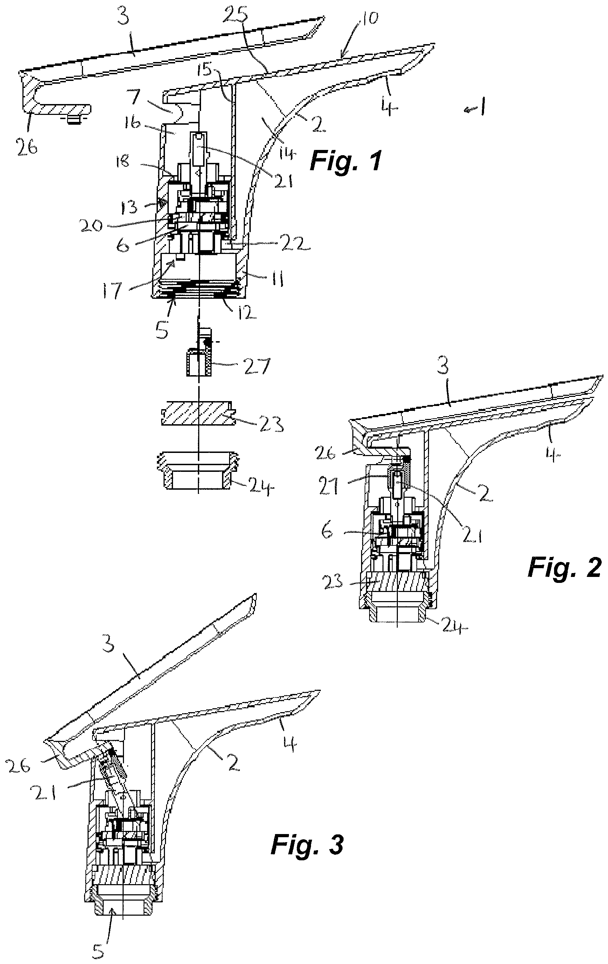

Figures 1 to 5 show an embodiment of an ablutionary fitting, which specifically comprises a tap. The tap of this embodiment is a mixer tap for a sink or bath, but the teachings of the invention can be applied to other taps, shower fittings or other ablutionary fittings.

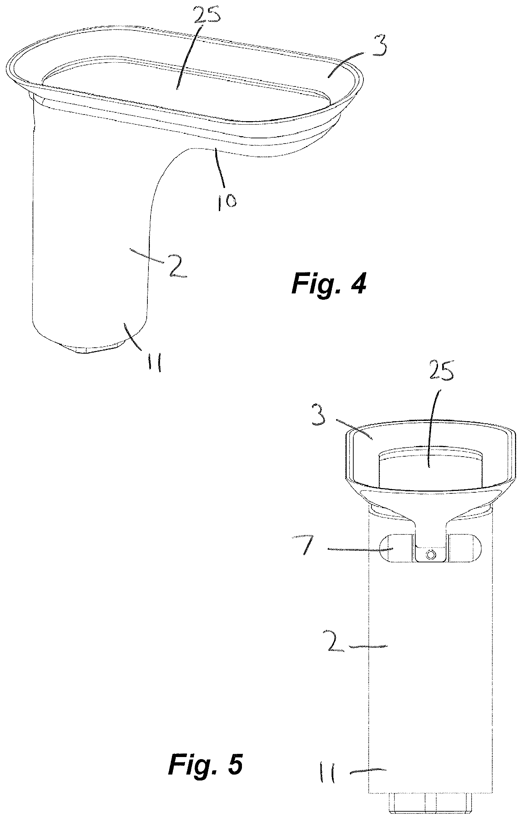

The tap 1 comprises a body 2 and a control lever 3. The body 2 includes an outlet 4 and a supply inlet 5. The body 2 is adapted to receive a control valve cartridge 6 for controlling the flow of fluid from the supply inlet 5 to the outlet 4. Control valve cartridges are known and will not be described in detail herein. The body 2 further includes a body aperture 7 to allow the connection of the control lever 3 to the control valve cartridge 6. The body aperture 7 is located on the back 8 of the tap 1 and thus faces substantially rearwardly with respect to the orientation of the tap when installed (shown in Figure 5). The outlet 4 is mounted within a spout 10 that is arranged to overhang a basin, sink or bath tub (not shown). It will be appreciated that when installed and in use the spout 10 will point substantially forward, towards a user, and the back 8, opposed to the spout 10, will typically face a wall of the room in which the tap 1 is installed.

The body 2 includes a base 11 which is adapted to abut a support surface, such as a sink or bath. The body 2 extends generally upwardly from the base 11 and then the spout 10 projects generally horizontally therefrom. The base 11 defines a downwardly facing base aperture 12, which forms the supply inlet 5. The supply inlet 5 receives the hot and cold water supplies from the building. The body 2 is substantially hollow and is divided into a plurality of sections by internal walls. The body 2 includes a control valve section 13 and a spout section 14 separated by a substantially vertical wall 15. The control valve section 13 is adapted to receive the control valve cartridge 6. Thus, the wall 15 and the body 2 define a recess for receiving the control valve cartridge 6, which is accessible through the base aperture 12.

The control valve section 13 is divided into two sub sections. A control section 16 is located in an upper portion of the control valve section 13. A valve section 17 is located in a lower portion of the control valve section 13. The base aperture 12 comprises an open end to the valve section 17. The valve section 17 and the control section 16 are separated by a flange 18, which extends radially inwardly from the body 2 and wall 15. The control section 16, valve section 17 and flange 18 are constructed and arranged to receive a control valve cartridge 6, which is known in the art. The control valve cartridge 6 comprises a valve part 20 and a control member part 21. The control member part 21 projects past the flange 18 and thus extends into the control section 16. The control valve cartridge 6 is located in a predetermined position by way of its engagement with the flange 18. The remainder of control valve cartridge 6 is mounted within the valve section 17. The control valve cartridge 6 is secured within the body 2 by a plug 23 held in place by a screw threaded collar 24, which screws into a complimentary screw thread on the inside surface of the base 11.

The spout section 14 has a first aperture, through the body 2, comprising the outlet 4. The spout section 14 is also connected to the valve section 17 via a bore 22 in the wall 15. The bore 22 is arranged such that water flowing into the supply inlet 5 must travel through the control valve cartridge 6 (when installed in the control valve body section 17), then into the spout section 14 before reaching the outlet 4.

The control lever 3 (best shown in Figure 4) comprises a substantially ring shaped member providing a grip portion, which is sized to align with a top surface 25 of body 2. However, it will be appreciated that the control lever 3 can be of any design provided a user can manipulate it to control the control valve cartridge 6 and thus the tap 1. The control lever 3 includes a lever finger 26, which comprises a narrow rod. The lever finger 26 extends away from the remainder of the control lever and then substantially parallel with it such that the control lever 3 and finger 26 are substantially U-shaped in cross-section. The body aperture 7 (best seen in Figure 5) comprises a narrow slot. The lever finger 26 is adapted to extend through the slot.

The control member part 21 of the control valve cartridge is arranged to receive a cap 27 at its free end. The cap 27 provides a connection for the lever finger 26 to couple to the control member part 21. It will be appreciated that the cap 27 may be integral with the control member part 21 or the lever finger 26 may connect directly to the control member part 21.

Figure 2 shows the control lever 3 connected to the control member part 21 by the lever finger 26. In the position shown in Figure 2, the control valve cartridge 6 prevents the flow of water from the supply inlet 5 to the outlet 4. Figure 3 shows the control lever 3 tilted upwards from the top surface 25. In this position, the control valve cartridge 6 allows the flow of water from the supply inlet 5 through the bore 22, into the spout section 14 and out of the outlet 4. Movement of the control lever such that it rotates the control member part 21 controls the mixing of hot and cold supplies and thus the temperature of the water leaving the outlet 4.

The above-described embodiments illustrate ways in which the invention can be put into practice and are not exhaustive of all possible ways of practicing the invention. Accordingly, the embodiments are not limiting on the scope of the invention and it will be understood that various modifications can be made without departing from the principles and concepts of the invention as set forth in the claims.

## Claims

1. An ablutionary fitting comprising a tap wherein the fitting comprises a body (2) and a control lever (3), the body (2) including a base having a base aperture and having an outlet (4) and a supply inlet (5), the outlet being mounted within a spout, a control valve cartridge (6) received in the body (2) for controlling the flow of fluid from the supply inlet (5) to the outlet (4), **characterised in that** the body comprises a single-piece body (2) having an unbroken top surface (25), and further includes a body aperture (7) at the rear (8) of the fitting (1) so as to face substantially rearwardly with respect to the orientation of the fitting (1) when installed to provide access through the body (2) at the rear of the fitting (1), wherein the control lever (3) is spaced above the top surface (25) and is connected to the control valve cartridge (6) through the body aperture (7) at the rear of the fitting (1).

2. The fitting of claim 1 wherein the base aperture (12) forms the supply inlet (5) and is adapted to receive the control valve cartridge (6) therethrough.

3. The fitting of any preceding claim wherein the control lever (3) includes a lever finger (26) and the body aperture (7) is arranged to receive the lever finger (26) therethrough to connect the control lever (3) to the control valve cartridge (6).

4. The fitting of claim 3 wherein the control lever (3) and lever finger (26) are substantially U-shaped in cross-section.

5. The fitting of any preceding claim wherein the body (1) has at least two internal sections; a control valve section (13) that receives the control valve cartridge (6) and a spout section (14) including the outlet (4).

6. The fitting of claim 5 wherein the control valve section (13) and spout section (14) are separated by an internal wall (15) that includes a bore (22) therethrough, wherein the bore (22) is arranged such that the control valve cartridge (6) controls the flow of fluid through the bore (22) to the spout section (14).

7. The fitting of claim 5 or claim 6 wherein the control valve section (13) is divided into two sections; a valve section (17) and a control section (16) wherein the valve section (17) is arranged to receive part of the control valve cartridge (6) and wherein a control member (21) of the control valve cartridge (6) is arranged to extend into the control section (16).

8. The fitting of claim 7 wherein the body aperture (7) extends through the body (2) into the control section (16) and wherein the control lever (3) is arranged to extend into the control section (16) and connect to the control member (21).

9. The fitting of claim 8 wherein the valve section (17) and control section (16) are separated by an annular flange (18) that locates the control valve cartridge (6) and also allows the control member (21)_of the cartridge (6) to extend into the control section (16), separated from the valve section (17), for connection to the control lever (3).

## Patentansprüche

1. Wascharmatur umfassend einen Wasserhahn, wobei die Armatur einen Körper (2) und einen Steuerhebel (3) umfasst, wobei der Körper (2) eine Basis mit einer Basisöffnung und mit einem Auslass (4) und einem Versorgungseinlass (5) aufweist, wobei der Auslass in einem Ausguss montiert ist, eine Steuerventilpatrone (6), die in dem Körper (2) aufgenommen ist, um den Fluidstrom von dem Versorgungseinlass (5) zu dem Auslass (4) zu steuern, **dadurch gekennzeichnet, dass** der Körper einen einteiligen Körper (2) mit einer ungebrochenen Oberseite (25) umfasst und weiter eine Körperöffnung (7) an der Rückseite (8) der Armatur (1) aufweist, um in Bezug auf die Ausrichtung der Armatur (1) im Wesentlichen nach hinten zu zeigen, wenn sie installiert ist, um Zugang durch den Körper (2) an der Rückseite der Armatur (1) bereitzustellen, wobei der Steuerhebel (3) über der Oberseite (25) beabstandet ist und mit der Steuerventilpatrone (6) durch die Körperöffnung (7) an der Rückseite der Armatur (1) verbunden ist.

2. Armatur nach Anspruch 1, wobei die Basisöffnung (12) den Versorgungseinlass (5) bildet und angepasst ist, um die Steuerventilpatrone (6) dort hindurch aufzunehmen.

3. Armatur nach einem vorstehenden Anspruch, wobei der Steuerhebel (3) einen Hebelfinger (26) aufweist und die Körperöffnung (7) angeordnet ist, um den Hebelfinger (26) dort hindurch aufzunehmen, um den Steuerhebel (3) mit der Steuerventilpatrone (6) zu verbinden.

4. Armatur nach Anspruch 3, wobei der Steuerhebel (3) und der Hebelfinger (26) im Querschnitt im Wesentlichen U-förmig sind.

5. Armatur nach einem vorstehenden Anspruch, wobei der Körper (1) mindestens zwei Innenabschnitte aufweist; einen Steuerventilabschnitt (13), der die Steuerventilpatrone (6) aufnimmt, und einen Ausgussabschnitt (14), der den Auslass (4) aufweist.

6. Armatur nach Anspruch 5, wobei der Steuerventilabschnitt (13) und der Ausgussabschnitt (14) durch eine Innenwand (15) getrennt sind, die eine Bohrung (22) dort hindurch aufweist, wobei die Bohrung (22) so angeordnet ist, dass die Steuerventilpatrone (6) den Fluidstrom durch die Bohrung (22) zu dem Ausgussabschnitt (14) steuert.

7. Armatur nach Anspruch 5 oder Anspruch 6, wobei der Steuerventilabschnitt (13) in zwei Abschnitte unterteilt ist; einen Ventilabschnitt (17) und einen Steuerabschnitt (16), wobei der Ventilabschnitt (17) angeordnet ist, um einen Teil der Steuerventilpatrone (6) aufzunehmen, und wobei ein Steuerelement (21) der Steuerventilpatrone (6) angeordnet ist, um sich in den Steuerabschnitt (16) hinein zu erstrecken.

8. Armatur nach Anspruch 7, wobei sich die Körperöffnung (7) durch den Körper (2) in den Steuerabschnitt (16) erstreckt und wobei der Steuerhebel (3) so angeordnet ist, dass er sich in den Steuerabschnitt (16) erstreckt und sich mit dem Steuerelement (21) verbindet.

9. Armatur nach Anspruch 8, wobei der Ventilabschnitt (17) und der Steuerabschnitt (16) durch einen ringförmigen Flansch (18) getrennt sind, der die Steuerventilpatrone (6) lokalisiert und auch ermöglicht, dass sich das Steuerelement (21) der Patrone (6) in den von dem Ventilabschnitt (17) getrennten Steuerabschnitt (16) zur Verbindung mit dem Steuerhebel (3) erstreckt.

## Revendications

1. Accessoire d'ablution comprenant un robinet dans lequel l'accessoire comprend un corps (2) et un levier de commande (3), le corps (2) incluant une base ayant une ouverture de base et ayant une sortie (4) et une entrée d'alimentation (5), la sortie étant montée à l'intérieur d'un bec, une cartouche de vanne de régulation (6) logée dans le corps (2) pour commander l'écoulement de fluide à partir de l'entrée d'alimentation (5) vers la sortie (4), **caractérisée en ce que** le corps est constitué d'un corps monobloc (2) ayant une surface supérieure non brisée (25), et inclut en outre une ouverture de corps (7) à l'arrière (8) l'accessoire (1) de manière à faire face sensiblement vers l'arrière par rapport à l'orientation de l'accessoire (1) lorsqu'il est installé pour fournir un accès à travers le corps (2) à l'arrière de l'accessoire (1), dans lequel le levier de commande (3) est espacé au-dessus de la surface supérieure (25) et relié à la cartouche de vanne de commande (6) à travers l'ouverture de corps (7) à l'arrière de l'accessoire (1).

2. Accessoire selon la revendication 1 dans lequel l'ouverture de base (12) forme l'entrée d'alimentation (5) et est adaptée pour recevoir la cartouche de vanne de commande (6) à travers celle-ci.

3. Accessoire selon l'une quelconque des revendications précédentes dans lequel le levier de commande (3) inclut un doigt de levier (26) et l'ouverture de corps (7) est conçue pour recevoir le doigt de levier (26) à travers celle-ci afin de connecter le levier de commande (3) à la cartouche de vanne de commande (6).

4. Accessoire selon la revendication 3 dans lequel le levier de commande (3) et le doigt de levier (26) ont une section transversale sensiblement en forme de U.

5. Accessoire selon l'une quelconque des revendications précédentes dans lequel le corps (1) a au moins deux sections internes ; une section de vanne de commande (13) qui reçoit la cartouche de vanne de commande (6) et une section de bec (14) incluant la sortie (4).

6. Accessoire selon la revendication 5 dans lequel la section de vanne de commande (13) et la section de bec (14) sont séparées par une paroi interne (15) qui inclut un alésage (22) à travers celle-ci, dans lequel l'alésage (22) est agencé de telle sorte que la cartouche de vanne de commande (6) commande l'écoulement de fluide à travers l'alésage (22) vers la section de bec (14).

7. Accessoire selon la revendication 5 ou de la revendication 6 dans lequel la section de vanne de commande (13) est divisée en deux sections ; une section de vanne (17) et une section de commande (16), dans lequel la section de vanne (17) est agencée pour recevoir une partie de la cartouche de vanne de commande (6) et dans lequel un élément de commande (21) de la cartouche de vanne de commande (6) est agencé pour s'étendre jusque dans la section de commande (16).

8. Accessoire selon la revendication 7 dans lequel l'ouverture de corps (7) s'étend à travers le corps (2) jusque dans la section de commande (16) et dans lequel le levier de commande (3) est agencé pour s'étendre jusque dans la section de commande (16) et se connecter à l'élément de commande (21).

9. Accessoire selon la revendication 8 dans lequel la section de vanne (17) et la section de commande (16) sont séparées par une bride annulaire (18) qui positionne la cartouche de vanne de commande (6) et permet également à l'élément de commande (21) de la cartouche (6) de s'étendre jusque dans la section de commande (16), séparée de la section de vanne (17), en vue d'une connexion au levier de commande (3).
